(19) Europäisches Patentamt
European Patent Office
Office européen des brevets

(11) **EP 4 462 282 A1**

(12) **EUROPEAN PATENT APPLICATION**

(43) Date of publication:
**13.11.2024 Bulletin 2024/46**

(21) Application number: **24175192.4**

(22) Date of filing: **10.05.2024**

(51) International Patent Classification (IPC):
**G06F 16/55** (2019.01)     **G06F 16/906** (2019.01)
**G06N 3/00** (2023.01)

(52) Cooperative Patent Classification (CPC):
**G06F 16/55; G06F 16/906; G06N 3/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023 US 202363501624 P**

(71) Applicants:
• **The Broad Institute Inc.**
**Cambridge, MA 02142 (US)**
• **Massachusetts Institute Of Technology**
**Cambridge, MA 02139 (US)**

(72) Inventors:
• **CAICEDO RUEDA, Juan C.**
**Cambridge, 02142 (US)**
• **QUACH, Alex**
**Cambridge, 02142 (US)**
• **FONNEGRA, Ruben**
**354 Medellín (CO)**
• **VALI SANIAN, Mohammad**
**Cambridge, 02142 (US)**
• **PAAVOLAINEN, Lassi**
**00100 Helsinki (FI)**
• **CHEN, Zitong**
**Cambridge, 02142 (US)**

(74) Representative: **Müller-Boré & Partner**
**Patentanwälte PartG mbB**
**Friedenheimer Brücke 21**
**80639 München (DE)**

(54) **DECOUPLED ENCODER-DECODER NETWORKS FOR IMAGE SIMULATION AND MODIFICATION**

(57) Decoupled encoder-decoder networks for image simulation and modification are described. An encoder network outputs feature representations of an input image of a biological sample, and a manipulation engine modifies the feature representations output by the encoder network by applying a variable associated with an experimental condition. A decoder network receives the modified feature representations from the manipulation engine and generates a simulated image by decoding the modified feature representations. The simulated image is a modified version of the input image that includes an estimated outcome of the experimental condition on the biological sample. The encoder network is trained separately from the decoder network, and the decoder network is adapted to the encoder network via at least one loss that is dependent on an output of the encoder network.

700

702
Train an encoder network of an image autoencoder with a digital image dataset independently from a decoder network of the image autoencoder

704
Pre-train the decoder network with the digital image dataset independently from the encoder network

706
Retrain the pre-trained decoder network with the digital image dataset based on at least one loss that is dependent on the trained encoder network

708
Train a connecting layer to map feature embeddings output by the encoder network to a latent space of the decoder network

710
Assemble the image autoencoder by connecting the trained encoder network to the trained decoder network via the connecting layer

FIG. 7

**Description**

RELATED APPLICATION

This application claims priority to U.S. Provisional Patent Application Serial No. 63/501,624, filed May 11, 2023, entitled "Decoupled Encoder-Decoder Networks for Image Simulation and Modification," the entire disclosure of which is hereby incorporated by reference herein in its entirety.

STATEMENT REGARDING GOVERNMENT SUPPORT

This invention was made with government support under Grant No. 2134695 awarded by the National Science Foundation. The government has certain rights in the invention.

BACKGROUND

Image autoencoders are widely used in computer vision, including style-transfer, image editing, and image recognition. Typically, image autoencoders include an encoder network and a decoder network. Encoder networks encode images into feature representations (e.g., using representation learning), and decoder networks decode these feature representations into realistic images. Advances in self-supervised learning have enabled encoder networks to be trained without labels, resulting in robust image recognition systems. Additionally, the development of high-resolution conditional modeling techniques has enabled decoder networks to generate highly realistic images.

SUMMARY

Decoupled encoder-decoder networks for image simulation and modification are described. An encoder network outputs feature representations of an input image of a biological sample, and a manipulation engine modifies the feature representations output by the encoder network by applying a variable associated with an experimental condition. A decoder network receives the modified feature representations from the manipulation engine and generates a simulated image by decoding the modified feature representations. The simulated image is a modified version of the input image that includes an estimated outcome of the experimental condition on the biological sample. The encoder network is trained separately from the decoder network, and the decoder network is adapted to the encoder network via at least one loss that is dependent on an output of the encoder network.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

BRIEF DESCRIPTION OF THE DRAWINGS

The detailed description is described with reference to the accompanying figures.

FIG. 1 is an illustration of an environment in an example implementation that is operable to employ techniques described herein.

FIG. 2 depicts an example of an implementation of a parallel framework for training an encoder network and a decoder network in an image autoencoder.

FIG. 3 depicts an example of an implementation of a framework for conditionally retraining a decoder network of an image autoencoder based on outputs from a separately trained encoder network.

FIG. 4 depicts a system in an example implementation in which an image simulation and analysis system generates a modified version of an input image using an image autoencoder having separately trained, linked encoder and decoder networks.

FIG. 5 depicts an example of an implementation of a modular image simulation and analysis system.

FIGS. 6A and 6B depict an example of an application of an image simulation and analysis system according to the described techniques.

FIG. 7 depicts an example procedure in which an image autoencoder having decoupled encoder-decoder networks is trained.

FIG. 8 depicts an example procedure in which a simulated image is generated by an image autoencoder after training of the image autoencoder.

FIG. 9 illustrates an example system including various components of an example device that can be implemented as any type of computing device as described and/or utilized with reference to FIGS 1-8 to implement embodiments of the techniques described herein.

## DETAILED DESCRIPTION

### Overview

Image autoencoders are a type of neural network that include an encoder network (e.g., an encoder) and a decoder network (e.g., a decoder). The encoder network processes an input image to produce a compressed representation of the image, typically as a vector of numbers referred to herein as "feature representations" or "feature embeddings." The decoder network processes this compressed representation and generates an image from it. The encoder network and the decoder network of conventional image autoencoders are trained simultaneously in an end-to-end learning model. By training the image autoencoder on a large dataset of images, the encoder network "learns" to identify and capture, in the compressed representations, the features of the images that enable the decoder network to produce accurate reconstructions.

However, the encoder network and the decoder network may have contradictory objectives in the training. For instance, the decoder network may produce high quality, realistic images even if the feature characteristics extracted by the encoder network are inaccurate, or the decoder network may produce lower quality images from accurate feature characteristics output by the encoder network. As such, the end-to-end learning model may result in a conventional image autoencoder with suboptimal performance of the encoder network and/or the decoder network. Consequently, conventional image autoencoders are either trained for high-quality image synthesis, without prioritizing the quality of the feature representations, or trained for accurate representation learning without aiming for high-quality image generation. These conventional autoencoder systems also impose a burden on computing resources because the suboptimal performance of the encoder network and/or the decoder network may demand higher computing power to produce an acceptable output.

Because this end-to-end training dynamic focuses on accurate image reconstruction, the image autoencoder is biased toward improving local pixel statistics during the reconstruction process. For example, a pixel distance metric may be used during training that penalizes the reconstruction of images that deviate from an original image at the pixel level. However, the pixel distance metric may not preserve a global consistency of the image reconstruction. Thus, optimizing for low-level pixel statistics can minimize the pixel distance without accurately reproducing high-level (e.g., semantic) image features of the original image. This hinders the development of high-level image editing techniques that rely on the editing of semantic features. That is, if the semantic features are not preserved by the image autoencoder, then it may not be possible to modify the semantic features to produce a simulated image that varies from the original image in a semantically meaningful way.

Independently trained feature extractors that have functionality similar to the encoder network of the image autoencoder are highly accurate and generalize well when trained with large datasets, as are high-resolution generative models that have functionality similar to the decoder network. However, because these models are separate and not assembled in an image autoencoder, the high-resolution generative model is not able to interpret features extracted by the feature extractor. Thus, using separate models for feature extraction and image generation, rather than an image autoencoder, cannot produce semantically editable images despite each model performing well at its particular task.

To overcome these problems, a decoupled encoder-decoder network for image simulation and modification is disclosed. Initially, an encoder network and a decoder network are separately trained based on an image dataset so that the networks are independently optimized for their respective tasks. The encoder network is trained to extract semantically meaningful feature representations that accurately inform on the content of an image, and the decoder network is trained to generate high-quality, highly accurate image reconstructions. The encoder network and the decoder network may undergo self-supervised training to optimize their respective parameters during this initial, separate training.

Once the encoder network and the decoder network are independently optimized, a connecting layer is used to link the encoder network and the decoder network, and the decoder network is fine-tuned (e.g., retrained) to reconstruct images from the feature representations extracted by the encoder network. The connecting layer is a computational layer that transforms the feature representations extracted by the encoder network to a latent space of the decoder network, thus enabling the decoder network to interpret the feature representations extracted by the encoder network. The decoder network is further adapted to the encoder network using a conditional retraining strategy.

In accordance with the described techniques, the conditional retraining procedure refines the parameters of the decoder network using at least one loss function that is dependent on the output of the encoder network. In one or more implementations, the at least one loss function is a feature cycle-consistency loss that conditions the decoder network to reconstruct images consistent with the feature representations extracted by the encoder network. Determining the feature cycle-consistency loss includes comparing a first set of feature representations output by the encoder network for an original image and a second set of feature representations output by the encoder network for a simulated image that is generated by the decoder network based on the first set of feature representations. For example, a greater match (e.g., lower difference) between the first set of feature representations and the second set of feature representations indicates that a higher number of semantically meaningful features are maintained in the simulated image. Thus, minimizing the feature cycle-consistency loss results in simulated images that are quantitatively and qualitatively more consistent with input images.

In one or more implementations, the at least one loss function additionally or alternatively includes an adversarial loss. The adversarial loss is used to train the decoder network to distinguish between original images and simulated images that are generated by the decoder network from random noise. The adversarial loss is calculated based on a discrimination of the decoder network between the feature representations extracted by the encoder network (e.g., as transformed by the connecting layer) from simulated feature representations. The adversarial loss trains a discriminator of the decoder network and a generator of the decoder network in an adversarial manner such that the discriminator "learns" (e.g., by maximizing a discriminator loss term) to accurately distinguish between the feature representations extracted by the encoder network and the simulated feature representations while the generator also "learns" (e.g., by minimizing a generator loss term) to generate high quality simulated images that fool the discriminator.

Based on the connecting layer and the at least one loss function, the decoder network is conditionally retrained to specifically decode feature representations extracted by the encoder network, which are highly accurate semantic representations of the input images due to the independent self-supervised training of the encoder network. The encoder network, the connecting layer, and the decoder network thus form a trained autoencoder that is optimized for both feature representations and semantically meaningful image reconstructions. Moreover, the decoupled initial training reduces the computational time and resources used compared with end-to-end training and provides a modular architecture that allows a single trained encoder network to be assembled into a plurality of different autoencoders. For example, the encoder network may be trained as a generalized feature extractor with a larger image dataset, and the decoder network may be trained with a smaller image dataset that is more specific to a particular reconstruction task and then adapted to the generalized encoder via the retraining process. This modular architecture further simplifies the training process and reduces the computational resources used in training.

The trained image autoencoder described above enables data-driven semantic image editing and manipulation that may be used to generate, as a simulated image, a modified version of an input image. In accordance with the described techniques, a manipulation engine may be used to semantically edit the feature representations extracted by the encoder network before they are decoded by the decoder network. By way of example, the manipulation engine may use probabilistic inference, differential equations, and/or classifiers to adjust vectors of the feature representations based on at least one variable in a semantically relevant way, thus resulting in an accurate prediction of the effects of the at least one variable on the input image.

In an example scenario where the manipulation engine is used for estimating a reaction of a biological sample to a treatment, the variable defines the treatment. For example, the variable may be associated with an experimental condition, and the image autoencoder may receive an image of the biological sample that has not been subjected to the experimental condition as the input image. The simulated image output by the image autoencoder may predict an outcome of the experimental condition on the biological sample. By providing outcome predictions, the described techniques may enable users (e.g., scientists) to make better-informed decisions on which experimental conditions to actually perform, thus reducing the resources (e.g., time, reagents, and/or facilities) used in such experiments.

In the following discussion, an example environment is first described that may employ the techniques described herein. Example implementation details and procedures are then described which may be performed in the example environment as well as other environments. Consequently, performance of the example procedures is not limited to the example environment, and the example environment is not limited to performance of the example procedures.

## Example Environment

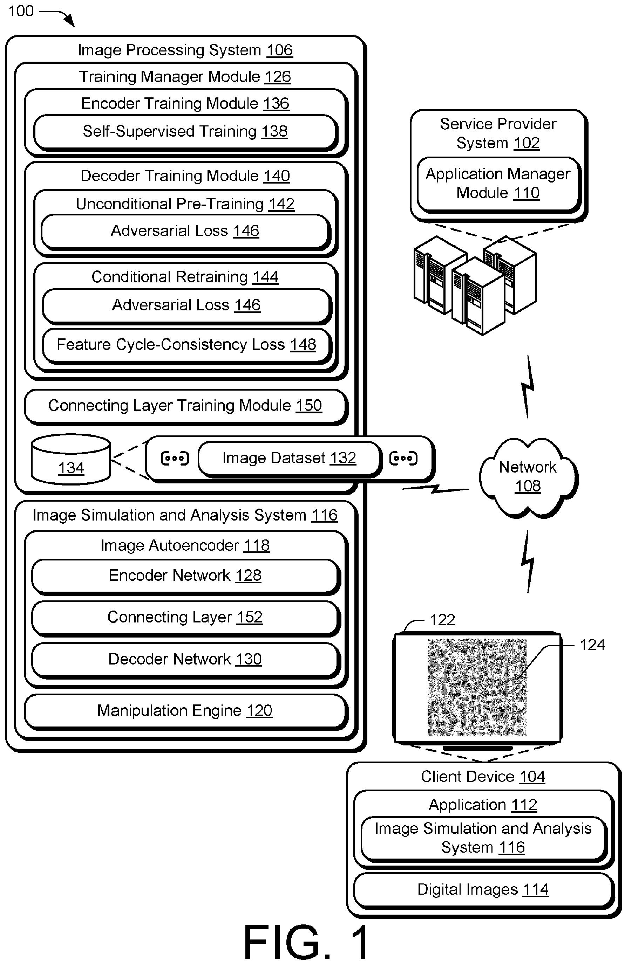

FIG. 1 is an illustration of an environment 100 in an example implementation that is operable to employ decoupled encoder-decoder networks for image simulation and modification as described herein. The illustrated environment 100 includes a service provider system 102, a client device 104, and an image processing system 106 that are communicatively coupled, one to another, via a network 108.

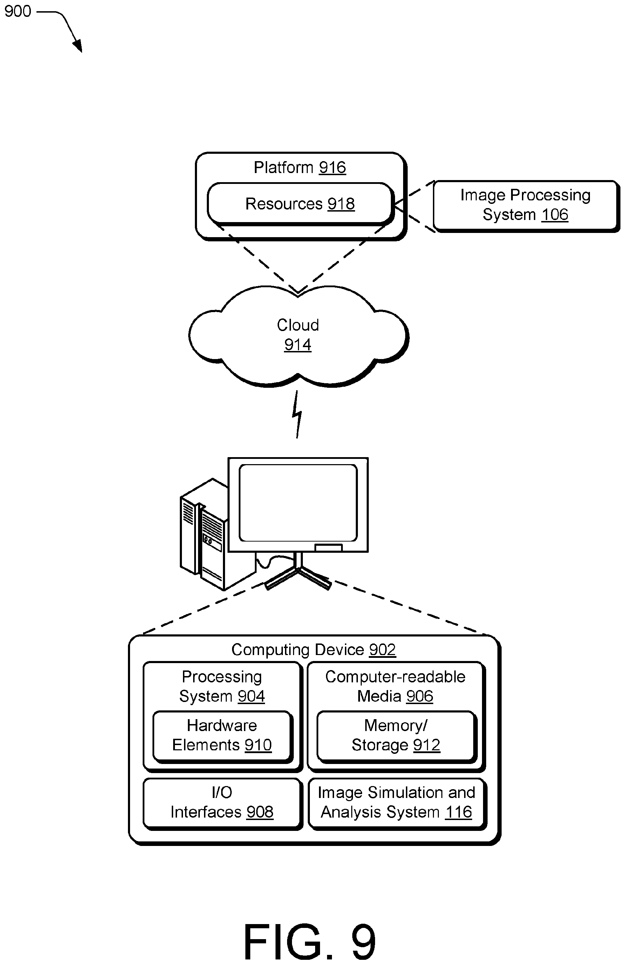

Computing devices that are usable to implement the service provider system 102, the client device 104, and the image processing system 106 may be configured in a variety of ways. A computing device, for instance, may be configured as a desktop computer, a laptop computer, a mobile device (e.g., assuming a handheld configuration, such as a tablet or mobile phone), and so forth. Thus, the computing device may range from full resource devices with substantial memory and processor resources (e.g., personal computers, game consoles) to a low-resource device with limited memory and/or processing resources (e.g., mobile devices). Additionally, a computing device may be representative of a plurality of different devices, such as multiple servers utilized to perform operations "over the cloud," as further described in relation to FIG. 9.

The service provider system 102 is illustrated as including an application manager module 110 that is representative of functionality to provide access of the image processing system 106 to a user of the client device 104 via the network 108. The application manager module 110, for instance, may expose content or functionality of the image processing system 106 that is accessible via the network 108 by an application 112 of the client device 104. The application 112 may be configured as a network-enabled application, a browser, a native application, and so on that obtains data from the service provider system 102 via the network 108. The data can be employed by the application 112 to enable the user of the client device 104 to communicate with the service provider system 102, such as to receive application updates and features when the service provider system 102 provides functionality to manage the application 112.

In the context of the described techniques, the application 112 includes functionality to simulate and/or modify digital images, such as digital images 114. In the illustrated example, the application 112 includes an image simulation and analysis system 116 that is implemented at least partially in hardware of the client device 104 for computer vision applications, such as representation learning, image generation, and/or image manipulation. In the example of the environment 100 shown in FIG. 1, the image simulation and analysis system 116 is included in (e.g., is part of) the image processing system 106 and includes an image autoencoder 118 and a manipulation engine 120.

Broadly speaking, "representation learning" refers to a machine learning technique where the image autoencoder 118 "learns" to automatically identify and extract relevant feature representations from input images. For example, representation learning includes the process of generating a compressed, lower-dimensional representation of an input image that captures the most prominent features or patterns of the input image in a lower-dimensional space, referred to herein as "latent space." As such, representation learning may include learning a more efficient and informative way to represent the input image in the lower-dimensional space by identifying the underlying patterns and structure of the image. This learned representation can then be used for various downstream tasks, such as image classification and/or image generation.

In accordance with the described techniques, "image manipulation" refers to the process of modifying or transforming the input image by manipulating its learned representation in the latent space. By way of example, image manipulation includes applying, e.g., via the manipulation engine 120, specific operations or modifications to the extracted feature representations of the image and then decoding it back into the original image space via the image autoencoder 118. By manipulating the extracted feature representations of the image in this way, the image autoencoder 118 can generate a new, simulated image having different features than the input image.

The client device 104 is shown displaying, via a display device 122, a digital image 124 produced by the image simulation and analysis system 116. In one or more implementations, the image simulation and analysis system 116 generates the digital image 124 by determining values for the corresponding pixels using the image autoencoder 118, as trained using machine learning according to the techniques described herein.

To provide the client device 104 with the application 112 having the image simulation and analysis system 116, the service provider system 102 may leverage the image processing system 106. Although the functionality of the image processing system 106 is illustrated as separate from the service provider system 102, this functionality may be incorporated as part of the service provider system 102, further divided among other entities, and so forth. Additionally, or alternatively, an entirety of or portions of the functionality of the image processing system 106 may be incorporated as part of the client device 104.

The image processing system 106 includes a training manager module 126 that is implemented at least partially in hardware of a computing device, in part, to deploy deep learning to generate the image autoencoder 118. The training manager module 126 is configured to separately train an encoder network 128 and a decoder network 130 of the image autoencoder 118, as will be described in detail below. In at least one implementation, the encoder network 128 and the decoder network 130 are transformer-based networks, which enables the networks to use self-attention to weigh different parts of an input. Alternatively, one or both of the encoder network 128 and the decoder network 130 is another type of network, such as a convolutional network. However, the inclusion of transformer-based networks may decrease a computational budget and processing time of the image autoencoder 118. By leveraging properties of transformer networks, the image autoencoder 118 may be trained to discover patterns in image collections through self-supervision (e.g., via the encoder network 128) and to generate high-quality images through self-attention (e.g., via the decoder network 130).

In general, the encoder network 128 represents functionality to output feature representations of an input image, as described above, and the decoder network 130 represents functionality to generate an image from the output feature representations (or other latent space representations). By way of example, the encoder network 128 is a vision transformer, and the decoder network 130 includes a generative model, such as a generative adversarial network (GAN). In one or more implementations, the decoder network 130 includes a GANformer architecture that utilizes a transformer architecture for both a generator and a discriminator of the network. The transformer architecture may include bipartite transformer layers, which compute attention between a set of input elements and a set of latent space vectors in a manner that reduces a computational cost compared with attention mechanisms that consider interactions between the input elements. The bipartite transformers of the decoder network 130, for example, may utilize a duplex attention mechanism which propagates information in both directions between two interacting elements.

In accordance with the described techniques, the training manager module 126 trains the encoder network 128 and the decoder network 130 using images from at least one image dataset 132, which may be stored in a data storage device 134 of the training manager module 126. In at least one implementation, the encoder network 128 and the decoder network 130 are trained with images from the same image dataset 132. In at least one variation, the encoder network 128 and the decoder network 130 are trained with images from different image datasets, which may include overlapping or non-overlapping image content. The at least one image dataset 132 may include a single type of image (e.g., natural images of human faces, natural images of landscapes, images of biological samples, medical images) or multiple different types of images.

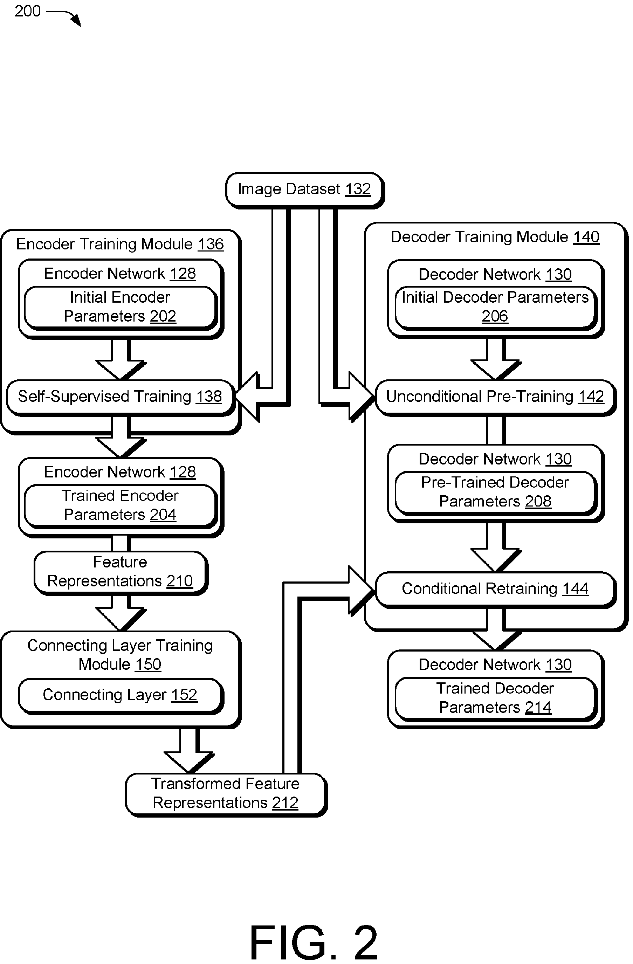

In one or more implementations, the training manager module 126 trains the encoder network 128 via an encoder training module 136 that implements self-supervised training 138. As such, the encoder network 128 may be trained using images from the at least one image dataset 132 without category labels or manual annotation of the images. Furthermore, the self-supervised training 138 of the encoder network 128 is not linked to, or dependent on, the decoder network 130. As such, the encoder training module 136 may maximize a performance of the encoder network 128 for capturing semantic features of input images. Additional details regarding the self-supervised training 138 will be described below with respect to FIG. 2.

In at least one implementation, the training manager module 126 trains the decoder network 130 via a decoder training module 140 that implements unconditional pre-training 142 and conditional retraining 144. By way of example, the unconditional pre-training 142 may utilize an unconditional generative modeling approach to capture the visual distribution of the at least one image dataset 132. The unconditional pre-training 142 of the decoder network 130 is not dependent on the encoder network 128, enabling independent control over the optimization choices and hyperparameters of the decoder network 130. For example, the unconditional pre-training 142 may utilize a random-noise latent vector as input to the decoder network 130. In contrast, the conditional retraining 144 is specific to the encoder network 128 and utilizes the output of the (trained) encoder network 128 as input to the decoder network 130.

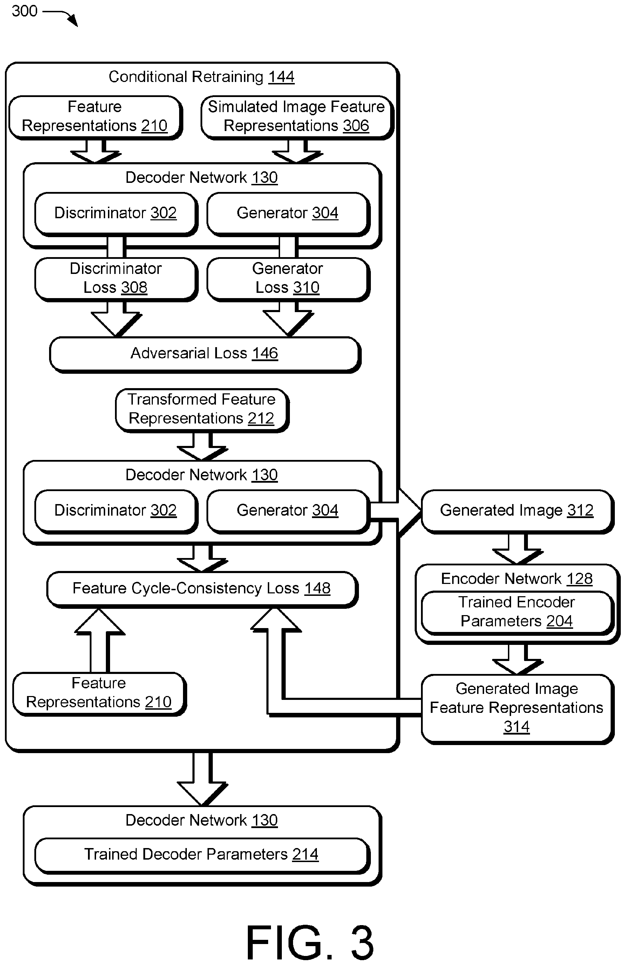

In the depicted example environment 100, the unconditional pre-training 142 utilizes an adversarial loss 146 to train the decoder network 130, and the conditional retraining 144 utilizes the adversarial loss 146 and a feature cycle-consistency loss 148 to adapt the decoder network 130 to the encoder network 128. Broadly, the adversarial loss 146 is calculated based on discrimination of the decoder network 130 between feature representations (e.g., token feature embeddings) that correspond to real images (e.g., from the at least one image dataset 132) compared with simulated feature representations (e.g., simulated feature embeddings) generated from random noise. The feature cycle-consistency loss 148 conditions the decoder network 130 to generate images consistent with the input. Notably, the feature cycle-consistency loss 148 results in semantically relevant features being maintained in the generated images. The feature cycle-consistency loss 148 is calculated by comparing a first set of feature representations output by the encoder network 128 for an original image and a second set of feature representations output by the encoder network 128 for a generated image that is produced by the decoder network 130 based on the first set of feature representations. Additional details regarding the conditional retraining 144 will be described below with respect to FIG. 3.

In the example shown in FIG. 1, the training manager module 126 further includes a connecting layer training module 150 configured to train a connecting layer 152. The connecting layer 152 represents functionality that connects the encoder network 128 and the decoder network 130 by mapping the feature representations output by the encoder network 128 to the latent space of the generative model. By way of example, the connecting layer 152 adjusts the dimensionality of the feature representations output by the encoder network 128 to match the input of the decoder network 130. As a non-limiting example, the connecting layer 152 reduces the dimensionality from 300 feature representations to 100 inputs. This dimensionality reduction enables the decoder network 130 to adjust the distribution of the latent space according to the feature representations output by the encoder network 128, thus ensuring the most semantically meaningful data are captured in images generated by the decoder network 130. As used herein, "semantically meaningful" refers to image features that have a clear and interpretable relationship to an image and capture the most relevant information about what is depicted in the image.

In at least one implementation, the connecting layer 152 includes a matrix multiplication operation, which is initialized with random weights that are adjusted (e.g., by the connecting layer training module 150) simultaneously with parameters of the decoder network 130 during the conditional retraining 144 of the decoder network 130. The connecting layer 152 may be implemented as a linear transformation of features with a rectified linear unit (ReLU) nonlinearity, for example. By including the connecting layer 152, overparameterized transformations of feature representations are avoided while also enabling the decoder network 130 to interpret the feature representations for reconstruction purposes.

In an example where the connecting layer 152 is implemented during the conditional retraining 144 of the decoder network 130, the input of a generator G of the decoder network 130 is replaced from a random-noise latent vector to the output of the encoder E. A feature embedding (e.g., class token) of an image x output by the encoder network 128 (e.g., $z = E(x)$) may be represented as $z \in R^n$, where $R^n$ is the feature embedding in n-dimensional space. The connecting layer 152 performs a linear transformation $\tau: R^n \to R^m$ that maps z to the corresponding input space of G, which is m-dimensional space. The decoder network 130 receives the transformed feature embeddings $G(\tau(z))$ from

the connecting layer 152.

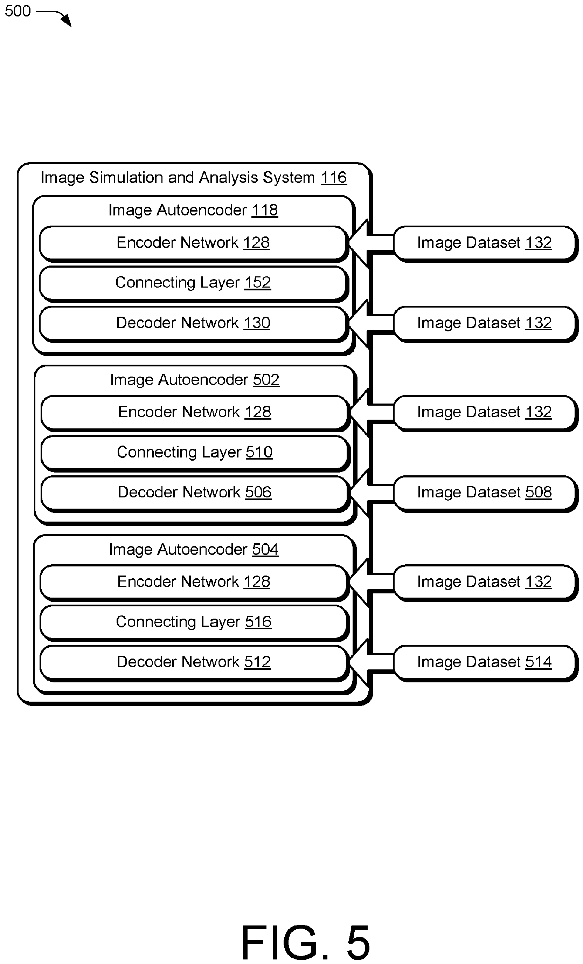

In this way, the training manager module 126 generates the image autoencoder 118 as a trained machine-learning model for the image processing system 106. The image processing system 106 provides a variety of advantages by implementing the image autoencoder 118 in this way. By way of example, separately training the encoder network 128 and the decoder network 130 reduces an amount of time it takes to train the image autoencoder 118 due to parallelization of the training. As another example, separately training the encoder network 128 and the decoder network 130 uses fewer computer hardware and computational resources than conventional end-to-end techniques used to train image autoencoders. Furthermore, the separate training enables independent control over optimization choices and hyperparameters of the encoder network 128 and the decoder network 130, thus enabling the performance of each network to be optimized for its specific task by separately monitoring the convergence of each network before adapting the decoder network 130 to the encoder network 128 via the connecting layer 152 and the conditional retraining 144. Furthermore, this decoupled training approach enables modularization of the autoencoder by reusing a same encoder network with a plurality of different decoder networks, as will be elaborated herein with respect to FIG. 5.

FIG. 2 depicts an example 200 of an implementation of a parallel framework for training an encoder network and a decoder network in an image autoencoder. In particular, the illustrated example 200 represents a base framework according to which the training manager module 126 generates and trains the encoder network 128 and the decoder network 130 of the image autoencoder 118, e.g., for the image simulation and analysis system 116.

The illustrated example 200 includes, from FIG. 1, the encoder training module 136 and the self-supervised training 138. The illustrated example 200 further includes, from FIG. 1, the decoder training module 140 including the unconditional pre-training 142 and the conditional retraining 144 as well as the connecting layer training module 150. Additional details regarding the conditional retraining 144, including the calculation of the adversarial loss 146 and the feature cycle-consistency loss 148, are discussed with respect to FIG. 3.

The illustrated example 200 represents a scenario in which the encoder training module 136 and the decoder training module 140 utilize the same at least one image dataset 132 for training. However, it is to be appreciated that in other scenarios, the encoder training module 136 and the decoder training module 140 utilize different image datasets, which may include overlapping or non-overlapping content. For example, the encoder training module 136 may train the encoder network 128 using a first image dataset, and the decoder training module 140 may train the decoder network 130 using a second, different image dataset.

In accordance with the described techniques, the encoder training module 136 performs the self-supervised training 138 on the encoder network 128, which includes initial encoder parameters 202. The initial encoder parameters 202, for instance, include weights associated with different layers of the encoder network 128, biases, activation functions, and/or regularization parameters that are to be adjusted (e.g., optimized) during the training. The initial encoder parameters 202 may further include hyperparameters, such as a number of layers in the encoder network 128 and a learning rate, which are set by a user prior to the training and are not adjusted during the training. In at least one implementation, the initial encoder parameters 202 are randomly generated. Additionally or alternatively, the initial encoder parameters 202 include at least one previously trained parameter from a different encoder network (e.g., an encoder network previously trained with a different image dataset). As an example, the at least one previously trained parameter includes a set of previously trained parameters from the different encoder network. Including previously trained parameters in the initial encoder parameters 202 may reduce a training time and computational load of the self-supervised training 138, for example.

During the self-supervised training 138, the encoder training module 136 adjusts the initial encoder parameters 202 to generate trained encoder parameters 204. For example, the trained encoder parameters 204 are optimized by minimizing a loss function, such as using gradient descent. In at least one implementation, the self-supervised training 138 uses a knowledge distillation with no labels (DINO) approach to self-supervision that uses a student network and a teacher network as a part of the training. The student network and the teacher network may have the same architecture but different parameters and may each produce output probabilities over a predetermined number of dimensions. In this example, the student network is trained to mimic the teacher network, which has been pre-trained on a large, unlabeled dataset (e.g., the at least one image dataset 132). During the training, the student network is initialized randomly and then trained on the same unlabeled dataset used to pre-train the teacher network. A loss function (e.g., gradient descent) is used to compare the feature representations of the student network and the teacher network for a given input sample. Because the teacher network is pre-trained, the teacher network is a fixed network. As an example, parameters of the teacher network are calculated as an exponential moving average of the student network. Furthermore, the loss function for the student may be determined, for example, from cross-entropy between the output distributions of the student network and the teacher network.

Moreover, a teacher-guided data augmentation scheme may be used to generate augmented views of an input image. In this scenario, the student network and the teacher network may present different augmented views of the same image, and the student network is trained with gradient descent to match the output of the teacher network. As the student network is trained, it learns to mimic the feature representations of the teacher network, and the use of the loss function ensures the learned representations are semantically meaningful. Once the training is complete, the student network becomes the trained encoder network 128 (e.g., including the trained encoder parameters 204) and is capable of extracting feature representations from images without labeled data.

It is to be appreciated that the self-supervised training 138 may use other self-supervised training approaches in addition to or as an alternative to the DINO approach, such as contrastive learning of visual representations (e.g., SimCLR), Momentum Contrast (e.g., MoCo), and Bootstrap Your Own Latent (e.g., BYOL) techniques. Still other training approaches may be used, such as supervised learning, transfer learning, semi-supervised learning, and the like.

Independently from the encoder training module 136, the decoder training module 140 performs the unconditional pre-training 142 of the decoder network 130, which includes initial decoder parameters 206. Similar to the initial encoder parameters 202, the initial decoder parameters 206 may include weights, biases, activation functions, regularization parameters and/or hyperparameters that, in at least one implementation, include one or more previously trained parameters from a different decoder network.

The unconditional pre-training 142 generates pre-trained decoder parameters 208. For example, the unconditional pre-training 142 may utilize a random-noise latent vector as input to the decoder network 130 such that the pre-trained decoder parameters 208 are optimized (e.g., by minimizing the adversarial loss 146) for high-quality image synthesis of the at least one image dataset 132 based on these inputs. In the context of a GANformer, self-attention may allow the decoder network 130 to weigh the importance of different spatial locations of the latent space during the unconditional pre-training 142. Upon generation of the pre-trained decoder parameters 208, the decoder network 130 becomes a pre-trained decoder network.

In order to adapt the decoder network 130 to the encoder network 128, feature representations 210 output by the encoder network 128 are used by the decoder training module 140 in the conditional retraining 144, additional details of which are described below with respect to FIG. 3. In at least one implementation, such as depicted in FIG. 2, the feature representations 210 undergo a linear transformation by the connecting layer 152 prior to being used in the conditional retraining 144. The connecting layer 152 is trained by the connecting layer training module 150 to map the higher dimensionality feature representations 210 to the lower dimensionality latent space of the decoder network 130. In such a scenario, the connecting layer 152 outputs transformed feature representations 212, which have a lower dimensionality compared with the feature representations 210, and the transformed feature representations 212 are utilized in the conditional retraining 144.

In at least one implementation, the connecting layer 152 is trained jointly with the decoder network 130, such as during the unconditional pre-training 142 and/or the conditional retraining 144. For example, the decoder network 130 may receive feature representations that have been transformed by the connecting layer 152 during the unconditional pre-training 142 and/or the conditional retraining 144. The connecting layer training module 150 may adjust weights of the connecting layer 152 while the decoder training module 140 adjusts parameters of the decoder network 130 in tandem as the connecting layer 152 and the decoder network 130 are trained jointly.

The pre-trained decoder parameters 208 are fine-tuned during the conditional retraining 144 to generate trained decoder parameters 214, which are optimized based on the encoder network 128. Thus, upon generation of the trained decoder parameters 214, the decoder network 130 is a trained decoder network that is specifically trained to generate images based on the feature representations 210 output by the encoder network 128 (e.g., as transformed by the connecting layer 152). In contrast to the end-to-end training dynamics of conventional image autoencoders that are explicitly focused on pixel-level accurate image reconstruction, this decoupled approach to training the encoder network 128 and the decoder network 130 assigns separate responsibilities to the network components, resulting in accurate feature representations and semantically meaningful image generations.

FIG. 3 depicts an example 300 of an implementation of a framework for conditionally retraining a decoder network of an image autoencoder based on outputs from a separately trained encoder network. In particular, the illustrated example 300 represents a framework according to which the training manager module 126 fine-tunes the decoder network 130 of the image autoencoder 118, e.g., for the image simulation and analysis system 116.

In the illustrated example, the adversarial loss 146 is used to train a discriminator 302 of the decoder network 130 to be a conditional network able to distinguish between real images and simulated images generated by a generator 304 of the decoder network 130, e.g., from random noise. The decoder network 130 receives, for example, the transformed feature representations 212 generated by the connecting layer 152 from the feature representations 210 output by the (trained) encoder network 128 for respective digital images of the at least one image dataset 132. Because the transformed feature representations 212 are generated from original images, the transformed feature representations 212 represent "real" image data. The decoder network 130 further receives simulated image feature representations 306, which correspond to feature representations extracted from simulated images generated by the generator 304 from random noise. Because the simulated image feature representations 306 are not based on original images, the simulated image feature representations 306 represent "fake" image data.

The discriminator 302 receives the transformed feature representations 212 and the simulated image feature representations 306 and outputs a probability score indicating whether the input data corresponds to real image data or fake image data. A discriminator loss 308 is calculated based on a difference between probability scores for the real image data versus the fake image data. The conditional retraining 144 aims to maximize the discriminator loss 308 in order for the discriminator 302 to distinguish between the real image data and the fake image data with high accuracy.

However, the conditional retraining 144 also aims to train the generator 304 to generate simulated images that are indistinguishable from original (e.g., not simulated/generated) images. A generator loss 310 is therefore also calculated based on the difference between the probability scores for the real image data versus the fake image data, with the conditional retraining 144 aiming to minimize the generator loss 310. The adversarial loss 146 is a combination of the discriminator loss 308 and the generator loss 310. For example, the adversarial loss 146 may be calculated as:

$$\mathcal{L}_{Adv} = \mathbb{E}_x \left[ log(D(x, z) \right] + \mathbb{E}_x \left[ log(1 - D(G(z), z)) \right]$$

where $D$ is the discriminator 302 and $G$ is the generator 304. By way of example, $D$ is a function that receives, as input, an image $x$ and its feature representation (e.g., an embedding) corresponding to $z = E(x)$. Continuing with this example, $E$ is a function representing the encoder network 128 that receives, as input, the image $x$ to produce the feature representation $z$. The output of $D$ is a probability estimation of how likely an image and its feature representations are real or synthesized by the generator $G$. In this way, the discriminator 302 is trained in an adversarial way with respect to the generator 304.

By minimizing the generator loss 310 and maximizing the discriminator loss 308 via the adversarial loss 146, the decoder training module 140 trains the discriminator 302 and the generator 304 in an adversarial manner such that the generator 304 learns to generate simulated images that can fool the discriminator 302 while the discriminator 302 learns to accurately distinguish between real image data and fake image data.

To determine the feature cycle-consistency loss 148, the decoder network 130 receives the transformed feature representations 212 for an original image of the at least one image dataset 132 and outputs (e.g., via the generator 304) a generated image 312 therefrom. The generated image 312 is input into the (trained) encoder network 128, which outputs generated image feature representations 314 for the input generated image 312. The generated image feature representations 314 are compared to the feature representations 210 to determine the feature cycle-consistency loss 148. The feature cycle-consistency loss 148 is a function that evaluates an expected value of a difference between features of the original image and features of a synthesized image. For example, the feature cycle-consistency loss 148 may be calculated as:

$$\mathcal{L}_{Fcc} = \mathbb{E}_x \left[ \|z - \hat{z}\|_2 \right]$$

$$= \mathbb{E}_x \left[ \left\| E(x) - E(G(E(x))) \right\|_2 \right]$$

where $x$ corresponds to the original image, $x$ corresponds to the generated image 312, $z$ corresponds to the feature representations 210 of the original image, and $\hat{z}$ corresponds to the generated image feature representations 314. The $z$ vectors are n-dimensional, and their difference is reduced to a scalar value using the Euclidean norm (e.g., the L2 norm). The empirical value of this expectation is used as the feature-cycle consistency objective.

The z vectors may be written in terms of the encoder function noted above with respect to the adversarial loss 146, with $z = E(x)$ indicating the features of the original image and $G(E(x))$ referring to the reconstruction of the encoded features of $x$ with the generator 304. This reconstruction is further evaluated with the encoder network 128 to compute features of the reconstruction, e.g., $E(G(E(x)))$. The generated image feature representations 314 are expected to match the feature representations 210 for the original image $x$ of the at least one image dataset 132 when the feature cycle-consistency loss is low (e.g., the feature cycle-consistency is high).

The inclusion of the feature cycle-consistency loss 148 in the conditional retraining 144 has advantages over conventionally used pixel distance metric techniques. For example, pixel distance metric techniques penalize the reconstruction of images that deviate too much from the original image at the pixel level but do not preserve the global consistency of semantically relevant features in the reconstructed images. In contrast, the feature cycle-consistency loss 148 penalizes the features of the generated image that are inconsistent with the original image to yield results that are quantitatively and qualitatively more consistent with the original image.

The decoder network 130 is fine-tuned based on the adversarial loss 146 and the feature cycle-consistency loss 148 to generate the trained decoder parameters 214, thus resulting in the trained decoder network 130. For example, the adversarial loss 146 and the feature cycle-consistency loss 148 may be utilized according to the following equation:

$$\mathcal{L} = \lambda_{Adv}\mathcal{L}_{Adv} + \lambda_{Fcc}\mathcal{L}_{Fcc}$$

which corresponds to a total loss to train the decoder network 130 and the connecting layer 152. In this example, the total loss ($\mathcal{L}$) to train the decoder network 130 with the connecting layer 152 is the summation of the adversarial loss 146 ($\mathcal{L}_{Adv}$) and the feature cycle-consistency loss 148 ($\mathcal{L}_{Fcc}$). In at least one implementation, the summation also includes weights associated with each loss term, e.g., $\lambda_{Adv}$ for the adversarial loss 146 and $\lambda_{Fcc}$ for the feature cycle-consistency loss 148, as indicated in the equation above. The weights are adjustable in order to give more importance to the adversarial loss 146 or the feature cycle-consistency loss 148. As a non-limiting example, the weight or importance of the feature cycle-consistency loss 148 (e.g., $\lambda_{Fcc}$) is higher than the weight or importance of the adversarial loss 146 (e.g., $\lambda_{Adv}$) in order to produce higher quality (e.g., more accurate) reconstruction results. Alternatively, the weight associated with the adversarial loss 146 is greater than the weight associated with the feature cycle-consistency loss 148.

Having considered example environments, consider now a discussion of some example details of the techniques for decoupled encoder-decoder networks for image simulation and modification.

**Decoupled Encoder-Decoder Networks for Image Simulation and Modification**

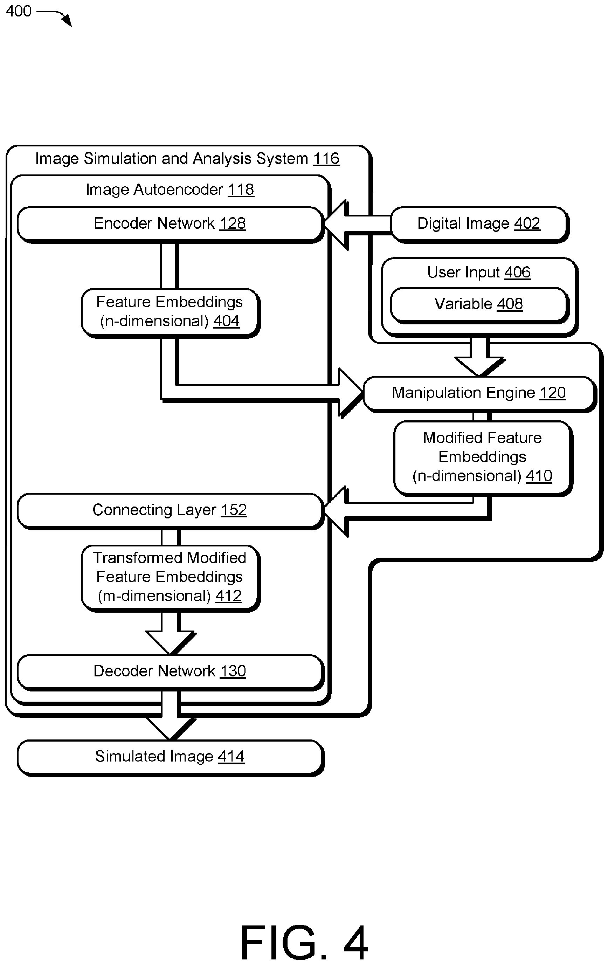

FIG. 4 depicts a system 400 in an example implementation in which an image simulation and analysis system generates a modified version of an input image using an image autoencoder having separately trained, linked encoder and decoder networks. In the depicted example, the image simulation and analysis system 116 of FIG. 1, including the image autoencoder 118 and the manipulation engine 120, is illustrated in more detail.

The encoder network 128 of the image autoencoder 118 receives a digital image 402 as input. The digital image 402 is in pixel space, and the encoder network 128 extracts feature embeddings 404 of the digital image 402 via a series of layers. The feature embeddings 404 are n-dimensional and provide a compressed (e.g., lower dimensional) representation of the digital image 402 in latent space. Moreover, the feature embeddings 404 are more semantically meaningful than pixel values of the digital image 402 because they inform on the content and characteristics of the digital image 402.

In at least one implementation, the manipulation engine 120 receives the feature embeddings 404 as well as user input 406 defining at least one variable 408. In examples where the digital image 402 is a biological image (e.g., an image of a cell or tissue), the at least one variable 408, for instance, is associated with an experimental condition. As another example where the digital image 402 is a medical image, the at least one variable 408 may be associated with a therapeutic treatment. In yet another example where the digital image 402 is a natural image of a face, the at least one variable 408 may be associated with a facial feature. Still other types of images and variables are possible without departing from the scope of the described techniques.

The manipulation engine 120 includes functionality to adjust the feature embeddings 404 based on the at least one variable 408. The manipulation engine 120 performs semantic manipulations in the latent space that affect how feature representations will be decoded, by the decoder network 130, to generate an image in pixel space. By way of example, the manipulation engine 120 may utilize probabilistic inference to determine one or more adjustments to the feature embeddings 404 based on the at least one variable 408, thus enabling data-driven image manipulations. In one or more implementations, the manipulation engine 120 applies mathematical operations to the vectors of the feature embeddings 404 to manipulate or otherwise further transform the feature embeddings 404 according to the at least one variable 408. As an example, the manipulation engine 120 may utilize differential equations to manipulate the feature embeddings 404.

In one or more implementations, the manipulation engine 120 utilizes one or more transformation functions, including, for example, affine transformations (e.g., rotation, translation, and scaling functions), convex combinations of features, and nonlinear transformations. Because the manipulation engine 120 receives the feature embeddings 404, and not the digital image 402, the manipulation engine 120 operates in the latent space, making it more computationally efficient, fast, and accurate compared to operating in image space. As a non-limiting example, the manipulation engine 120 is a conditional probabilistic model that estimates feature representation values given another variable (e.g., the at least one variable 408) as the condition. The conditional probabilistic model is optimized independently for a particular conditional estimation task, which may provide flexible image manipulation workflows. For example, the same image autoencoder 118 may be selectively paired with one of a plurality of different manipulation engines, each separately trained for performing a different image manipulation task, depending on a desired image manipulation.

In at least one implementation, the user input 406 further includes labels and annotations regarding feature representations in order for the manipulation engine 120 to predict feature representation transformations in the latent space, e.g., according to prior knowledge or existing example data. By way of example, when the at least one variable 408 is associated with a treatment condition, the labels and annotations may specify types of treatment conditions. The manipulation engine 120 may be considered supervised by these labels and annotations, whereas the encoder network 128 and the decoder network 130 are not trained with these labels and do not utilize these labels to facilitate image manipulation and analysis.

The manipulation engine 120 outputs modified feature embeddings 410, which include at least one difference (e.g., semantic difference) from the feature embeddings 404. In one or more implementations, the manipulation engine 120 does not perform dimension reduction, and thus, the output modified feature embeddings 410 are also n-dimensional.

The connecting layer 152 receives the modified feature embeddings 410 and maps them to transformed modified feature embeddings 412, which are m-dimensional. In the present example, m-dimensional space has lower dimensionality than n-dimensional space. Thus, the connecting layer 152 performs a dimensionality reduction, and the transformed modified feature embeddings 412 are a compressed representation of the modified feature embeddings 410. As a non-limiting example, the feature embeddings 404 and the modified feature embeddings 410 may include 300 features, whereas the transformed modified feature embeddings 412 may include 100 inputs. As such, in this non-limiting example, the transformed modified feature embeddings 412 include one-third of the features of the modified feature embeddings 410 and the feature embeddings 404.

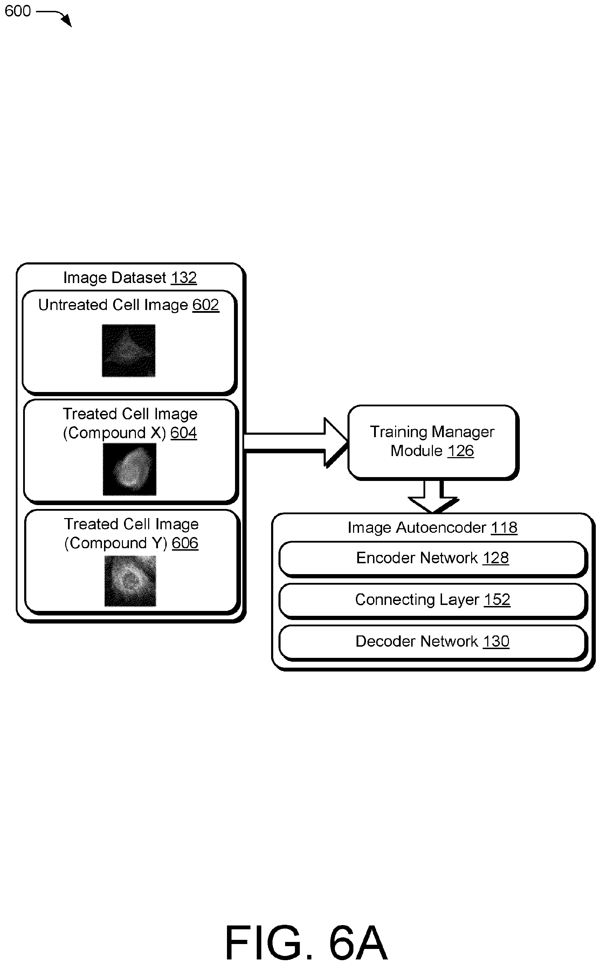

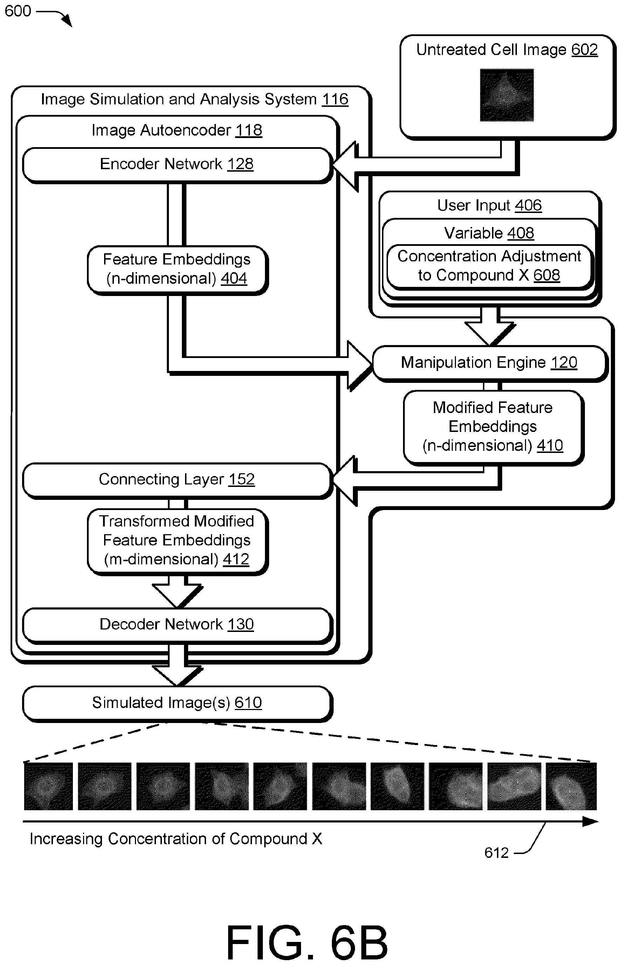

In the illustrated example system 400, the decoder network 130 receives the transformed modified feature embeddings 412, which represent a low-dimensional, modified feature representation of the digital image 402 in latent space, and maps the transformed modified feature embeddings 412 to pixel space to generate a simulated image 414. The simulated image 414 is a modified version of the digital image 402 that includes an estimated outcome of an effect of the at least one variable 408. For instance, when the digital image 402 is an image of a biological sample and the at least one variable 408 is associated with an experimental condition, the simulated image 414 represents an estimated outcome of the experimental condition on the biological sample. An example application of using the manipulation engine 120 for latent image manipulation and analysis with respect to a biological sample is discussed below with reference to FIGS. 6A and 6B.

It is to be appreciated that in at least one variation, the connecting layer 152 receives the feature embeddings 404 directly from the encoder network 128, thus bypassing the manipulation engine 120. This may occur, for example, when image manipulation is not desired. In such scenarios, the simulated image 414 is a reconstruction of the digital image 402.

FIG. 5 depicts an example 500 of an implementation of a modular image simulation and analysis system. The illustrated example 500 depicts, from FIG. 1, the image simulation and analysis system 116 including the image autoencoder 118 (e.g., a first autoencoder). As described above, the image autoencoder 118 is assembled from the encoder network 128 and the decoder network 130, both of which are trained (e.g., via the training manager module 126) using images from the at least one image dataset 132 and linked via the connecting layer 152. The at least one image dataset 132 may include, for example, a plurality of different image types, and the encoder network 128 may be trained as a generalized feature extractor.

In the example implementation illustrated in FIG. 5, the image simulation and analysis system 116 further includes an image autoencoder 502 (e.g., a second image autoencoder) and an image autoencoder 504 (e.g., a third image autoencoder). The image autoencoder 502 includes the encoder network 128, trained using images from the at least one image dataset 132, and a decoder network 506 that is trained using images from an image dataset 508, which is different than the at least one image dataset 132. The image dataset 508 may include, for instance, images of the same type of image as input into the image autoencoder 502 for simulation and/or analysis. Despite being trained using different image datasets, the decoder network 506 is adapted to the encoder network 128 via the conditional retraining 144 described above with respect to FIGS. 1-3 and linked via a connecting layer 510, which is functionally similar to the connecting layer 152.

Similarly, the image autoencoder 504 includes the encoder network 128 and a decoder network 512, which is trained using images from an image dataset 514. The image dataset 514 is different than the at least one image dataset 132 and the image dataset 508. The decoder network 512 is adapted to the encoder network 128 via the conditional retraining 144 and is linked via a connecting layer 516.

The decoder network 130, the decoder network 506, and the decoder network 512 are separately trained from each other and undergo pre-training (e.g., the unconditional pre-training 142) separately from the encoder network 128. Because the decoder network 130, the decoder network 506, and the decoder network 512 are trained using different image datasets, the decoder networks are trained to generate different images from each other. For example, the trained parameters of the decoder network 506 are different than the trained parameters of the decoder network 130 (e.g., the trained decoder parameters 214) and the trained parameters of the decoder network 512.

In this way, the decoupled training of the encoder network and the decoder network enables the encoder network 128 to be utilized in a plurality of different image autoencoders. The plurality of different image autoencoders may be independently optimized, for instance, for simulating different types of images or for different image analyses. This modular strategy further reduces the training and computational resources involved in image autoencoder generation. For instance, conventional end-to-end training techniques do not allow a single trained encoder network to be utilized in a plurality of different autoencoders. Furthermore, the example 500 of the image simulation and analysis system 116 depicted in FIG. 5 enables a user to select from among a plurality of trained image autoencoders depending on an image simulation or analysis task to be performed.

Having discussed example details of the techniques for decoupled encoder-decoder networks for image simulation and modification, consider now an example application to illustrate additional aspects of the techniques.

**Example Application**

FIGS. 6A and 6B depict an example 600 of an application of an image simulation and analysis system according to the described techniques. In particular, the example 600 includes a bioscience application of the image simulation and analysis system 116 introduced in FIG. 1, although it is to be understood that other applications are possible without departing from the scope of the described techniques.

In the example 600, the image autoencoder 118 is trained using images of cells in order to train the encoder network 128 on cellular morphology, as depicted in FIG. 6A. For example, the at least one image dataset 132 includes images of untreated cells, such as an untreated cell image 602, as well as images of cells exposed to chemical treatment, including a treated cell image 604 and a treated cell image 606. The treated cell image 604 is an image of a cell treated with a compound X at a first known concentration, and the treated cell image 606 is an image of a cell treated with a compound Y, which is different than compound X, at a second known concentration. The first known concentration may be different than or the same as the second known concentration. In at least one implementation, images of cells treated with additional known concentrations of compound X and/or compound Y are also included in the at least one image dataset 132. The at least one image dataset 132 may further include images of cells that have undergone treatment with other chemicals, biological agents, or genetic manipulations. As such, the at least one image dataset 132 may include images of biological samples (e.g., cells or tissue) after exposure of the biological samples to a plurality of different experimental conditions.

Referring now to FIG. 6B, once trained, the image autoencoder 118 is used in the image simulation and analysis system 116 to evaluate variations between untreated and treated cells. In the depicted example 600, the untreated cell image 602 is input into the encoder network 128, which outputs the feature embeddings 404, as described above. In this scenario, the feature embeddings 404 describe aspects of cellular morphology features from the input untreated cell image 602, such as cellular shape, cytoskeletal structure, nuclear shape and location, and the like. In particular, the feature embeddings 404 extracted by the encoder network 128 encode relevant visual variations that can be leveraged by classifiers and/or probabilistic inferences used by the manipulation engine 120 to estimate the response of the cell to treatments (e.g., chemical, biological, and/or genetic treatments) even when a continuous dose variable produces non-linear effects in cell structure.

The manipulation engine 120 receives the cell-specific feature embeddings 404 and further receives the user input 406, including the at least one variable 408. In the depicted example 600, the at least one variable 408 includes a concentration adjustment to compound X 608. For example, the concentration adjustment to compound X 608 may include instructions for simulating one or a plurality of concentration adjustments to compound X, thus simulating treatment with concentration(s) of compound X that are different than (e.g., less than or greater than) the first known concentration. The concentration adjustment to compound X 608 corresponds to an experimental condition where cells are treated with compound X for a defined period of time with at least one concentration of compound X that is not included in images of the at least one image dataset 132.

The manipulation engine 120 performs a semantic edit of the input feature embeddings 404 and outputs modified feature embeddings 410 according to the concentration adjustment to compound X 608. In examples where the concentration adjustment to compound X 608 includes more than one concentration adjustment, the manipulation engine 120 iteratively outputs the modified feature embeddings 410.

The connecting layer 152 receives and processes the modified feature embeddings 410 to produce the transformed modified feature embeddings 412, such as via a linear transformation. The decoder network 130 receives each iteration of the transformed modified feature embeddings 412 from the connecting layer 152 and generates simulated image(s) 610. For example, a given image of the simulated image(s) 610 corresponds to one iteration of the iteratively adjusted modified feature embeddings 410.

The simulated image(s) 610 include at least one generated cell image depicting an estimated reaction of the cell with the adjusted concentration(s) of compound X. In the depicted example 600, the simulated image(s) 610 include a series of images showing an estimated effect of a range of concentrations of compound X on cellular morphology, with the concentration increasing in the direction of an arrow 612. In this way, the decoder network 130 generates a smooth visualization of the transition of states between the untreated cell image 602 and the treated cell image 604, for instance.

Furthermore, the image simulation and analysis system 116 distinguishes between the effects caused by treatment with compound X versus those caused by treatment with compound Y on cellular morphology. For example, because the at least one variable 408 includes the concentration adjustment to compound X 608, and not the compound Y, the simulated image(s) 610 do not show estimated effects of treatment with compound Y because of semantically meaningful differences identified by the manipulation engine 120 in the feature embeddings extracted by the encoder network 128 for treatment with compound X versus compound Y.

Moreover, the feature embeddings 404 output by the encoder network 128 may be mapped, such as by using a uniform manifold approximation and projection (UMAP) technique, to visualize relationships between images in the at least one image dataset 132. For example, the visualization may reveal clustering of untreated versus treated cells as well as clusters of different treatment types. In this way, the image simulation and analysis system 116 may be used to understand variations between different cell treatments, which may provide insights into experimental conditions. As an example, structure-activity relationships may be used by the manipulation engine 120 in order to predict the effects of treating cells with a given compound based on images of cells treated with other, structurally similar compounds.

Having discussed example details of the techniques for decoupled encoder-decoder networks for image simulation and modification, consider now some example procedures to illustrate additional aspects of the techniques.

**Example Procedures**

This section describes example procedures for decoupled encoder-decoder networks for image simulation and modification in one or more implementations. Aspects of the procedures may be implemented in hardware, firmware, or software, or a combination thereof. The procedures are shown as a set of blocks that specify operations performed by one or more devices and are not necessarily limited to the orders shown for performing the operations by the respective blocks. In at least some implementations, the procedures are performed by a suitably configured device, such as the client device 104 of FIG. 1 that makes use of the image simulation and analysis system 116 or the image processing system 106 that makes use of the training manager module 126.

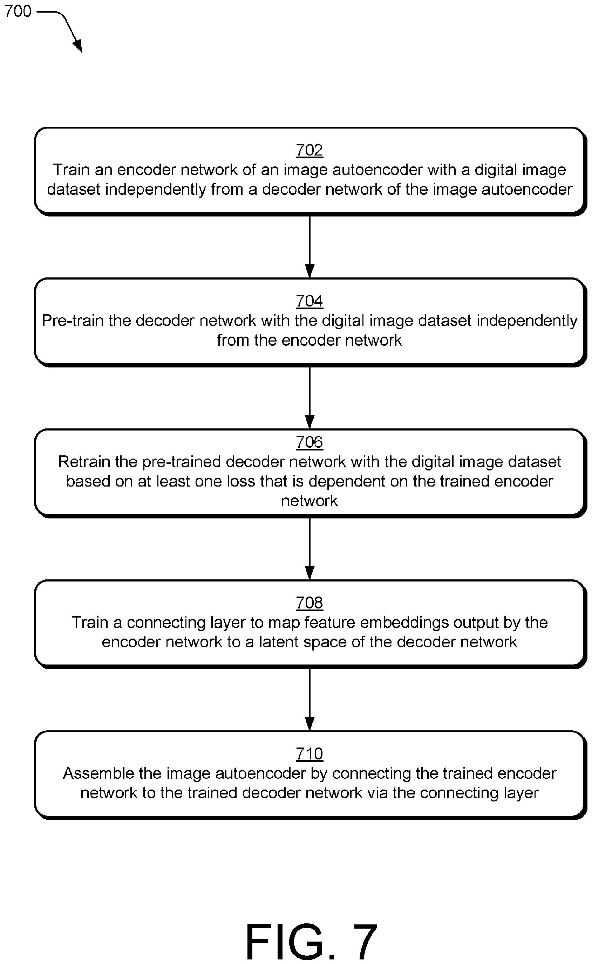

FIG. 7 depicts an example procedure 700 in which an image autoencoder having decoupled encoder-decoder networks is trained.

An encoder network of an image autoencoder is trained with a digital image dataset independently from a decoder network of the image autoencoder (block 702). In accordance with the principles discussed herein, the training manager module 126 includes the encoder training module 136 for training the encoder network 128, and the encoder training module 136 includes training functionality that is separate from the decoder training module 140 utilized for training the decoder network 130. By way of example, the encoder training module 136 utilizes the self-supervised training 138 to train the encoder network 128 on the at least one image dataset 132 without category labels or manual annotations of the images. The self-supervised training 138 may include, for example, the DINO approach to self-supervised learning.

Via the self-supervised training 138, the encoder network 128 is trained to produce semantically discriminative feature embeddings. Because the encoder network 128 is trained separately from the decoder network 130, the encoder training module 136 may maximize a performance of the encoder network 128 for capturing semantic features of input images. This is different than end-to-end image autoencoder training strategies that prioritize image reconstruction rather than feature extraction.

The decoder network is pre-trained with the digital image dataset independently from the encoder network (block 704). In accordance with the principles discussed herein, the training manager module 126 pre-trains the decoder network 130 via the decoder training module 140, which implements the unconditional pre-training 142. By way of example, the unconditional pre-training 142 utilizes an unconditional generative modeling approach to capture the visual distribution of the at least one image dataset 132. Because the unconditional pre-training 142 of the decoder network 130 is not dependent on the encoder network 128, the decoder training module 140 may maximize a performance of the decoder network 130 for high-quality image reconstruction. The unconditional pre-training 142 may utilize the adversarial loss 146 in training the decoder network 130, for example.

The pre-trained decoder network is retrained with the digital image dataset based on at least one loss that is dependent on the trained encoder network (block 706). In accordance with the principles discussed herein, the training manager module 126 retrains the decoder network 130 via the decoder training module 140, which implements the conditional retraining 144 using the at least one image dataset 132. By way of example, the conditional retraining 144 is specific to the encoder network 128 and utilizes feature representations 210 output by the trained encoder network 128 to determine the at least one loss.

In at least one implementation, the at least one loss is the feature cycle-consistency loss 148, which conditions the decoder network 130 to reconstruct images consistent with input features. As a result, the decoder network 130 is trained to generate images that maintain semantically relevant features extracted by the encoder network 128. By way of example, to determine the feature cycle-consistency loss 148, a first set of feature representations is output from the encoder network 128 for an original image. The decoder network 130 generates a simulated image based on the first set of feature representations. The simulated image is input into the encoder network 128, which outputs a second set of feature representations corresponding to the simulated image. The feature cycle-consistency loss 148 is calculated based on a comparison of the first set of feature representations to the second set of feature representations.

Additionally, or alternatively, the at least one loss is the adversarial loss 146. By way of example, the adversarial loss 146 is used to train the decoder network 130 to discriminate between real images and simulated images generated by the decoder network 130 from random noise. The adversarial loss 146 may be used to train the discriminator 302 of the decoder network 130 and the generator 304 of the decoder network 130 in an adversarial manner such that the generator 304 learns to generate simulated images that can fool the discriminator 302, while the discriminator 302 learns to accurately distinguish between real images and simulated images. As a result, a quality of the images generated by the decoder network 130 may be increased.

In at least one variation, the decoder network 130 is trained using the feature cycle-consistency loss 148 without pre-training; however, pre-training the decoder network 130 may increase a performance of the decoder network 130 because the decoder network 130 has already been exposed to a natural distribution of the images in the at least one image dataset 132 during the conditional retraining 144.

A connecting layer is trained to map feature embeddings output by the encoder network to a latent space of the decoder network (block 708). In accordance with the principles discussed herein, the training manager module 126 trains the connecting layer 152 via the connecting layer training module 150. By way of example, the connecting layer 152 is trained, via the connecting layer training module 150, to map the feature representations 210 output by the encoder network 128 to the latent space of the decoder network 130, which has reduced dimensionality. In one or more implementations, the connecting layer 152 includes a matrix multiplication operation, which is initialized with random weights that are adjusted (e.g., by the connecting layer training module 150) simultaneously with parameters of the decoder network 130 during the unconditional pre-training 142 and/or the conditional retraining 144 of the decoder network 130.

The image autoencoder is assembled by connecting the trained encoder network to the trained decoder network via the connecting layer (block 710). By way of example, the image autoencoder may be assembled such that the connecting layer 152 receives the feature representations 210 output from the encoder network 128, performs a linear transformation to map the feature representations 210 to transformed feature representations 212, and provides the transformed feature representations 212 to the decoder network 130.

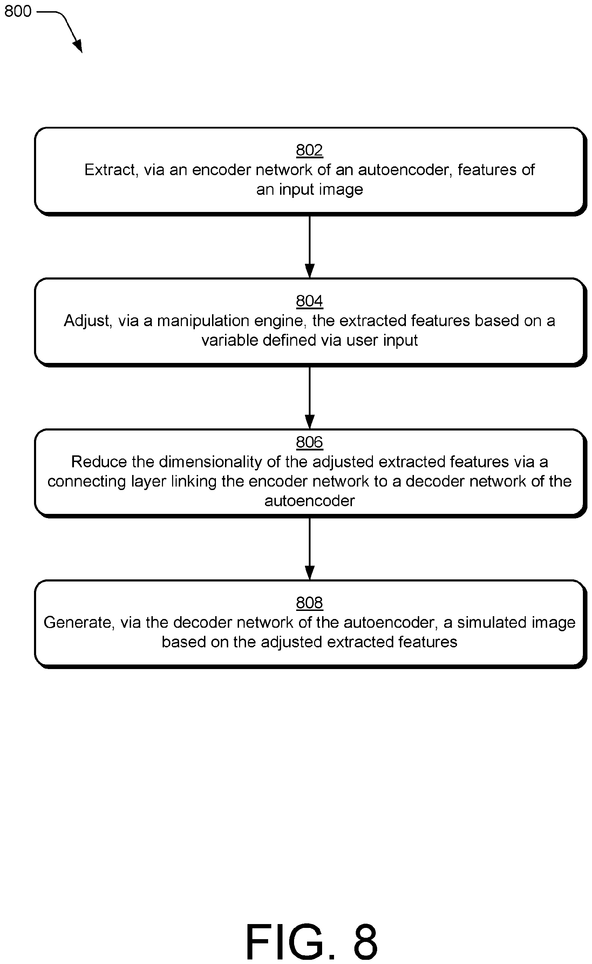

FIG. 8 depicts an example procedure 800 in which a simulated image is generated by an image autoencoder after training of the image autoencoder. For example, the image autoencoder may be trained according to the procedure 700 of FIG. 7.

Features of an input image are extracted via an encoder network of the autoencoder (block 802). By way of example, the encoder network 128 processes the input image to produce a compressed representation of the image as described by vectors, e.g., the feature representations 210. In particular, the encoder network 128 may be trained to extract semantically meaningful features that capture the most relevant information about what is depicted in the pixel values of the input image.

The extracted features are adjusted via a manipulation engine based on a variable defined via user input (block 804). By way of example, the variable defines a modification to at least one extracted feature. The variable may be associated with an experimental condition, such as when the input image is a biological image (e.g., of a cell or of tissue). As another example where the input image is an image of a human face, the variable may include an eye color adjustment, a change in expression (e.g., more smile or less smile), a head shape adjustment, and the like.

In accordance with the described techniques, the manipulation engine 120 adjusts the extracted features (e.g., the feature embeddings 404) based on the at least one variable 408, such as by applying mathematical operations to the extracted features in a semantically meaningful manner. For example, the manipulation engine 120 may use classifiers or probabilistic inference to modify the extracted features in a data-driven manner.

A dimensionality of the adjusted extracted features is reduced via a connecting layer linking the encoder network to a decoder network of the autoencoder (block 806). By way of example, the connecting layer 152 maps the modified feature embeddings 410 to the latent space of the decoder network 130. This dimensionality reduction enables the decoder network 130 to adjust the distribution of the latent space according to the feature representations output by the encoder network 128, thus ensuring the most semantically meaningful data are captured in images generated by the decoder network 130.

A simulated image is generated via the decoder network of the autoencoder based on the adjusted extracted features (block 808). By way of example, the decoder receives the adjusted extracted features with reduced dimensionality (e.g., the transformed modified feature embeddings 412) from the connecting layer 152 and generates the simulated image 414 by decoding the adjusted extracted features back to pixel space. Accordingly, the simulated image 414 may be a modified version of the input image, as modified by the manipulation engine 120 based on the at least one variable 408. Furthermore, because the most semantically meaningful features are extracted by the encoder network 128 and the decoder network 130 is trained with the feature cycle-consistency loss 148, the simulated image 414 accurately captures high-level semantic features that are quantitatively and qualitatively consistent with the input image.

Having described example procedures in accordance with one or more implementations, consider now an example system and device that can be utilized to implement the various techniques described herein.

## Example System and Device

FIG. 9 illustrates an example system generally at 900 that includes an example computing device 902 that is representative of one or more computing systems and/or devices that may implement the various techniques described herein. This is illustrated through inclusion of the image simulation and analysis system 116. The computing device 902 may be, for example, a server of a service provider, a device associated with a client (e.g., a client device), an on-chip system, and/or any other suitable computing device or computing system.

The example computing device 902 as illustrated includes a processing system 904, one or more computer-readable media 906, and one or more I/O interfaces 908 that are communicatively coupled, one to another. Although not shown, the computing device 902 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 904 is representative of functionality to perform one or more operations using hardware. Accordingly, the processing system 904 is illustrated as including hardware elements 910 that may be configured as processors, functional blocks, and so forth. This may include implementation in hardware as an application specific integrated circuit or other logic device formed using one or more semiconductors. The hardware elements 910 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically executable instructions.

The computer-readable media 906 is illustrated as including memory/storage 912. The memory/storage 912 represents memory/storage capacity associated with one or more computer-readable media. The memory/storage 912 may include volatile media (such as random-access memory (RAM)) and/or nonvolatile media (such as read only memory (ROM), Flash memory, optical disks, magnetic disks, and so forth). The memory/storage 912 may include fixed media (e.g., RAM, ROM, a fixed hard drive, and so on) as well as removable media (e.g., flash memory, a removable hard drive, an optical disc, and so forth). The computer-readable media 906 may be configured in a variety of other ways as further described below.

Input/output interface(s) 908 are representative of functionality to allow a user to enter commands and information to computing device 902, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 902 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 902. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media, and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 902, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, the hardware elements 910 and the computer-readable media 906 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 910. The computing device 902 may be configured to implement particular instructions and/or functions corresponding to the software and/or hardware modules. Accordingly, implementation of a module that is executable by the computing device 902 as software may be achieved at least partially in hardware, e.g., through use of computer-readable storage media and/or hardware elements 910 of the processing system 904. The instructions and/or functions may be executable/operable by one or more articles of manufacture (for example, one or more computing devices 902 and/or processing systems 904) to implement techniques, modules, and examples described herein.

The techniques described herein may be supported by various configurations of the computing device 902 and are not limited to the specific examples of the techniques described herein. This functionality may also be implemented all or in part through use of a distributed system, such as over a "cloud" 914 via a platform 916 as described below.

The cloud 914 includes and/or is representative of a platform 916 for resources 918, which are depicted including the image processing system 106. The platform 916 abstracts underlying functionality of hardware (e.g., servers) and software resources of the cloud 914. The resources 918 may include applications and/or data that can be utilized while computer processing is executed on servers that are remote from the computing device 902. Resources 918 can also include services provided over the Internet and/or through a subscriber network, such as a cellular or Wi-Fi network.

The platform 916 may abstract resources and functions to connect the computing device 902 with other computing devices. The platform 916 may also serve to abstract scaling of resources to provide a corresponding level of scale to encountered demand for the resources 918 that are implemented via the platform 916. Accordingly, in an interconnected device scenario, implementation of functionality described herein may be distributed throughout the system 900. For example, the functionality may be implemented in part on the computing device 902 as well as via the platform 916 that abstracts the functionality of the cloud 914.

The techniques described herein relate to a system including: an encoder network to output feature representations of an input image of a biological sample; a manipulation engine to modify the feature representations output by the encoder network by applying a variable associated with an experimental condition; and a decoder network to receive the modified feature representations from the manipulation engine and generate a simulated image by decoding the modified feature representations, the simulated image including a modified version of the input image that includes an estimated outcome of the experimental condition on the biological sample. In a first example of the system, the encoder network and the decoder network are separately trained. In a second example of the system, optionally including the first example, after the encoder network and the decoder network are separately trained, the decoder network is adapted to the encoder network based on a feature cycle-consistency loss. In a third example of the system, optionally including one or both of the first and second examples, the feature cycle-consistency loss is calculated by comparing a first set of feature representations output by the encoder network for an original image and a second set of feature representations output by the encoder network for a generated image that is generated by the decoder network based on the first set of feature representations. In a fourth example of the system, optionally including one or more or each of the first through third examples, the encoder network and the decoder network are trained via self-supervised learning using a same digital image dataset. In a fifth example of the system, optionally including one or more or each of the first through fourth examples, the encoder network is trained using a different image dataset than the decoder network. In a sixth example of the system, optionally including one or more or each of the first through fifth examples, the encoder network is a vision transformer network, and the decoder network is a generative model. A seventh example of the system optionally includes one or more or each of the first through sixth examples and further comprises a user interface to receive user input to the manipulation engine, and wherein the manipulation engine modifies the feature representations output by the encoder network based on the user input. In an eighth example of the system, optionally including one or more or each of the first through seventh examples, the user input defines the variable associated with the experimental condition. In a ninth example of the system, optionally including one or more or each of the first through eighth examples, the estimated outcome of the experimental condition on the biological sample is an estimated reaction of the biological sample to the experimental condition. In a tenth example of the system, optionally including one or more or each of the first through ninth examples, the experimental condition includes at least one treatment during a defined time period. An eleventh example of the system optionally includes one or more or each of the first through tenth examples and further comprises a training dataset for the decoder network, and wherein the training dataset for the decoder network includes images of the biological sample after exposure of the biological sample to a plurality of experimental conditions other than the experimental condition. A twelfth example of the system optionally includes one or more or each of the first through eleventh examples and further comprises a plurality of decoder networks including the decoder network, each of the plurality of decoder networks separately trained from each other using a different image dataset. A thirteenth example of the system optionally includes one or more or each of the first through twelfth examples and further comprises a connecting layer to map the feature representations output by the encoder network to a latent space of the decoder network. In a fourteenth example of the system, optionally including one or more or each of the first through thirteenth examples, the connecting layer is trained during training of the decoder network and reduces a dimensionality of the feature representations output by the encoder network.

The techniques described herein also relate to a system including: an encoder network to output feature representations of an input image; a manipulation engine to modify the feature representations output by the encoder network; and a decoder network to receive the modified feature representations from the manipulation engine and generate a simulated image by decoding the modified feature representations, the simulated image including a modified version of the input image. In a first example of the system, the encoder network and the decoder network are separately trained. In a second example of the system, optionally including the first example, after the encoder network and the decoder network are separately trained, the decoder network is adapted to the encoder network based on a feature cycle-consistency loss. In a third example of the system, optionally including one or both of the first and second examples, the feature cycle-consistency loss is calculated by comparing a first set of feature representations output by the encoder network for an original image and a second set of feature representations output by the encoder network for a generated image that is generated by the decoder network based on the first set of feature representations. In a fourth example of the system, optionally including one or more or each of the first through third examples, the encoder network and the decoder network are trained via self-supervised learning using a same digital image dataset. In a fifth example of the system, optionally including one or more or each of the first through fourth examples, the encoder network is trained using a different image dataset than the decoder network. In a sixth example of the system, optionally including one or more or each of the first through fifth examples, the encoder network is a vision transformer network, and the decoder network is a generative adversarial transformer network including bipartite transformer layers. A seventh example of the system optionally includes one or more or each of the first through sixth examples and further comprises a user interface to receive user input to the manipulation engine, and wherein the manipulation engine modifies the feature representations output by the encoder network based on the user input. An eighth example of the system optionally includes one or more or each of the first through seventh examples and further comprises a plurality of decoder networks including the decoder network, each of the plurality of decoder networks separately trained from each other using a different image dataset. A ninth example of the system optionally includes one or more or each of the first through eighth examples and further comprises a connecting layer to map the feature representations output by the encoder network to a latent space of the decoder network. In a tenth example of the system, optionally including one or more or each of the first through ninth examples, the connecting layer is trained during training of the decoder network and reduces a dimensionality of the feature representations output by the encoder network.

The techniques described herein also relate to a method including: training an encoder network of an image autoencoder with a digital image dataset independently from a decoder network of the image autoencoder; pre-training the decoder network with the digital image dataset independently from the encoder network; and retraining the pre-trained decoder network with the digital image dataset using a feature cycle-consistency loss that is dependent on the trained encoder network. In a first example of the method, the retraining the pre-trained decoder network is further based on an adversarial loss, and the method further includes: outputting, from the trained encoder network, feature embeddings for respective digital images of the digital image dataset; generating simulated image feature embeddings; and calculating the adversarial loss based on discrimination of the pre-trained decoder network between the feature embeddings and the simulated image feature embeddings. A second example of the method optionally includes the first example and further comprises outputting, from the trained encoder network, feature embeddings for respective digital images of the digital image dataset; outputting, from the pre-trained decoder network, generated images based on the feature embeddings for the respective digital images of the digital image dataset; outputting, from the trained encoder network, generated image feature embeddings for respective generated images; and calculating the feature cycle-consistency loss of the pre-trained decoder network based on a comparison of the feature embeddings and the generated image feature embeddings for a digital image of the digital image dataset and a corresponding generated image, respectively. In a third example of the method, optionally including one or both of the first and second examples, the encoder network and the decoder network are transformer networks connected via a connecting layer that maps feature embeddings output by the encoder network to a latent space of the decoder network. A fourth example of the method optionally includes one or more or each of the first through third examples and further comprises training the connecting layer during the retraining of the pre-trained decoder network. In a fifth example of the method, optionally including one or more or each of the first through fourth examples, the decoder network includes a generative adversarial transformer architecture. In a sixth example of the method, optionally including one or more or each of the first through fifth examples, the generative adversarial transformer architecture includes bipartite transformer layers. In a seventh example of the method, optionally including one or more or each of the first through sixth examples, the training the encoder network includes: training a student network of the encoder network using a first set of augmented views of an image; training a teacher network of the encoder network using a second set of augmented views of the image, the second set different than the first set; and matching an output of the student network with an output of the teacher network via gradient descent.

The techniques described herein also relate to a method including: training a decoder network of an autoencoder separately from an encoder network of the autoencoder; after the training, adapting the decoder network to the encoder network based on a feature cycle-consistency loss that is dependent on the encoder network; and after the adapting: extracting, via the encoder network of the autoencoder, features of an image; adjusting, via a manipulation engine, the extracted features based on a variable defined via user input; and generating, via the decoder network of the autoencoder, a simulated image based on the adjusted extracted features. A first example of the method further comprises calculating the feature cycle-consistency loss by comparing a first set of feature representations output by the encoder network for an original image and a second set of feature representations output by the encoder network for a generated image, the generated image output by the decoder network based on the first set of feature representations. In a second example of the method, optionally including the first example, the decoder network is further adapted to the encoder network based on a conditional adversarial loss. In a third example of the method, optionally including one or both of the first and second examples, the training the decoder network of the autoencoder separately from the encoder network of the autoencoder includes: training the encoder network using an encoder training dataset including a plurality of different image types; and training the decoder network using a decoder training dataset including images of a same image type as the image. In a fourth example of the method, optionally including one or more or each of the first through third examples, the image is of a biological sample; the variable is associated with an experimental condition; and the simulated image is an estimated outcome of the experimental condition on the biological sample. In a fifth example of the method, optionally including one or more or each of the first through fourth examples, the training the decoder network of the autoencoder separately from the encoder network of the autoencoder includes: generating a decoder training dataset that includes images of a same type as the image of the biological sample; and training the decoder network, and not the encoder network, using the decoder training dataset. In a sixth example of the method, optionally including one or more or each of the first through fifth examples, the decoder training dataset further includes images of biological samples after at least one treatment of the biological samples. In a seventh example of the method, optionally including one or more or each of the first through sixth examples, the at least one treatment includes application of a chemical compound, application of a biological agent, or a genetic manipulation. In an eighth example of the method, optionally including one or more or each of the first through seventh examples, the at least one treatment is not included in the experimental condition. In a ninth example of the method, optionally including one or more or each of the first through eighth examples, the biological sample includes a cell. In a tenth example of the method, optionally including one or more or each of the first through ninth examples, the biological sample includes tissue.

## Conclusion

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A system comprising:

an encoder network to output feature representations of an input image of a biological sample;

a manipulation engine to modify the feature representations output by the encoder network by applying a variable associated with a first experimental condition; and

a decoder network to receive the modified feature representations from the manipulation engine and generate a simulated image by decoding the modified feature representations, the simulated image comprising a modified version of the input image that includes an estimated outcome of the first experimental condition on the biological sample, wherein the encoder network and the decoder network are separately trained.

2. The system of claim 1, wherein:

after the encoder network and the decoder network are separately trained, the decoder network is adapted to the encoder network based on a feature cycle-consistency loss; and

the feature cycle-consistency loss is calculated by comparing a first set of feature representations output by the encoder network for an original image and a second set of feature representations output by the encoder network for a generated image that is generated by the decoder network based on the first set of feature representations.

3. The system of claim 1 or 2, wherein the encoder network and the decoder network are trained via self-supervised learning using a same digital image dataset.

4. The system of claim 1 or 2, wherein the encoder network is trained using a different image dataset than the decoder network.

5. The system of any one of the preceding claims, wherein the manipulation engine modifies the feature representations output by the encoder network based on user input, wherein the user input defines the variable associated with the first experimental condition.

6. The system of any one of the preceding claims, further comprising a training dataset for the decoder network, and wherein the training dataset for the decoder network includes images of the biological sample after exposure of the biological sample to a plurality of experimental conditions other than the first experimental condition.

7. The system of any one of the preceding claims, further comprising a plurality of decoder networks including the decoder network, each of the plurality of decoder networks being separately trained from each other using a different image dataset.

8. The system of any one of the preceding claims, further comprising a connecting layer to map the feature representations output by the encoder network to a latent space of the decoder network, wherein the connecting layer is trained during training of the decoder network and reduces a dimensionality of the feature representations output by the encoder network.

9. A method comprising:

training a decoder network of an autoencoder separately from an encoder network of the autoencoder;
after the training, adapting the decoder network to the encoder network based on a feature cycle-consistency loss that is dependent on the encoder network; and
after the adapting:

extracting, via the encoder network of the autoencoder, features of an image;
adjusting, via a manipulation engine, the extracted features based on a variable defined via user input; and
generating, via the decoder network of the autoencoder, a simulated image based on the adjusted extracted features.

10. The method of claim 9, further comprising:
calculating the feature cycle-consistency loss by comparing a first set of feature representations output by the encoder network for an original image and a second set of feature representations output by the encoder network for a generated image, the generated image output by the decoder network based on the first set of feature representations.

11. The method of claim 9 or 10, wherein the training the decoder network of the autoencoder separately from the encoder network of the autoencoder comprises:

training the encoder network using an encoder training dataset including a plurality of different image types; and
training the decoder network using a decoder training dataset including images of a same image type as the image.

12. The method of any one of claims 9 to 11, wherein:

the image is of a biological sample;
the variable is associated with an experimental condition; and
the simulated image is an estimated outcome of the experimental condition on the biological sample.

13. The method of claim 12, wherein the training the decoder network of the autoencoder separately from the encoder network of the autoencoder comprises:

generating a decoder training dataset that includes images of a same type as the image of the biological sample; and
training the decoder network, and not the encoder network, using the decoder training dataset.

14. The method of claim 13, wherein the decoder training dataset further includes images of biological samples after at least one treatment of the biological samples.

15. The method of claim 14, wherein the at least one treatment includes application of a chemical compound, application of a biological agent, or a genetic manipulation.

100 ⟶

**Image Processing System 106**

**Training Manager Module 126**

Encoder Training Module 136

Self-Supervised Training 138

Decoder Training Module 140

Unconditional Pre-Training 142

Adversarial Loss 146

Conditional Retraining 144

Adversarial Loss 146

Feature Cycle-Consistency Loss 148

Connecting Layer Training Module 150

134 ⤎ Image Dataset 132

**Image Simulation and Analysis System 116**

Image Autoencoder 118

Encoder Network 128

Connecting Layer 152

Decoder Network 130

Manipulation Engine 120

**Service Provider System 102**

Application Manager Module 110

Network 108

122

124

**Client Device 104**

Application 112

Image Simulation and Analysis System 116

Digital Images 114

# FIG. 1

200 ⟶

Image Dataset 132

**Encoder Training Module 136**

Encoder Network 128

Initial Encoder Parameters 202

⬇

Self-Supervised Training 138

⬇

Encoder Network 128

Trained Encoder Parameters 204

⬇

Feature Representations 210

⬇

Connecting Layer Training Module 150

Connecting Layer 152

⬇

Transformed Feature Representations 212

**Decoder Training Module 140**

Decoder Network 130

Initial Decoder Parameters 206

⬇

Unconditional Pre-Training 142

⬇

Decoder Network 130

Pre-Trained Decoder Parameters 208

⬇

Conditional Retraining 144

⬇

Decoder Network 130

Trained Decoder Parameters 214

# FIG. 2

300

## Conditional Retraining 144

Feature Representations 210

Simulated Image Feature Representations 306

### Decoder Network 130

Discriminator 302

Generator 304

Discriminator Loss 308

Generator Loss 310

Adversarial Loss 146

Transformed Feature Representations 212

### Decoder Network 130

Discriminator 302

Generator 304

Generated Image 312

### Encoder Network 128

Trained Encoder Parameters 204

Feature Cycle-Consistency Loss 148

Feature Representations 210

Generated Image Feature Representations 314

### Decoder Network 130

Trained Decoder Parameters 214

# FIG. 3

400 ⟶

**Image Simulation and Analysis System 116**

**Image Autoencoder 118**

Encoder Network 128

Digital Image 402

User Input 406

Variable 408

Feature Embeddings (n-dimensional) 404

Manipulation Engine 120

Modified Feature Embeddings (n-dimensional) 410

Connecting Layer 152

Transformed Modified Feature Embeddings (m-dimensional) 412

Decoder Network 130

Simulated Image 414

# FIG. 4

500 —⟶

**Image Simulation and Analysis System 116**

**Image Autoencoder 118**

Encoder Network 128 ————— Image Dataset 132

Connecting Layer 152

Decoder Network 130 ————— Image Dataset 132

**Image Autoencoder 502**

Encoder Network 128 ————— Image Dataset 132

Connecting Layer 510

Decoder Network 506 ————— Image Dataset 508

**Image Autoencoder 504**

Encoder Network 128 ————— Image Dataset 132

Connecting Layer 516

Decoder Network 512 ————— Image Dataset 514

# FIG. 5

600 ⟶

FIG. 6A

600 —

Untreated Cell Image 602

Image Simulation and Analysis System 116

Image Autoencoder 118

Encoder Network 128

Feature Embeddings
(n-dimensional) 404

User Input 406

Variable 408

Concentration Adjustment
to Compound X 608

Manipulation Engine 120

Modified Feature
Embeddings
(n-dimensional) 410

Connecting Layer 152

Transformed Modified
Feature Embeddings
(m-dimensional) 412

Decoder Network 130

Simulated Image(s) 610

Increasing Concentration of Compound X

612 —

# FIG. 6B

700 —

**702**
Train an encoder network of an image autoencoder with a digital image dataset independently from a decoder network of the image autoencoder

**704**
Pre-train the decoder network with the digital image dataset independently from the encoder network

**706**
Retrain the pre-trained decoder network with the digital image dataset based on at least one loss that is dependent on the trained encoder network

**708**
Train a connecting layer to map feature embeddings output by the encoder network to a latent space of the decoder network

**710**
Assemble the image autoencoder by connecting the trained encoder network to the trained decoder network via the connecting layer

# FIG. 7

800 —

**802**
Extract, via an encoder network of an autoencoder, features of an input image

↓

**804**
Adjust, via a manipulation engine, the extracted features based on a variable defined via user input

↓

**806**
Reduce the dimensionality of the adjusted extracted features via a connecting layer linking the encoder network to a decoder network of the autoencoder

↓

**808**
Generate, via the decoder network of the autoencoder, a simulated image based on the adjusted extracted features

# FIG. 8

900 ⎯

Platform 916

Resources 918

Image Processing
System 106

Cloud
914

Computing Device 902

Processing
System 904

Hardware
Elements 910

Computer-readable
Media 906

Memory/
Storage 912

I/O
Interfaces 908

Image Simulation and
Analysis System 116

FIG. 9

**EUROPEAN SEARCH REPORT**

Europäisches
Patentamt
European
Patent Office
Office européen
des brevets

Application Number

EP 24 17 5192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SEVETLIDIS VASILEIOS ET AL: "Whole Image Synthesis Using a Deep Encoder-Decoder Network", 23 September 2016 (2016-09-23), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 127 - 137, XP047358850, ISBN: 978-3-540-74549-5 [retrieved on 2016-09-23] * abstract * * page 132, line 24 - line 25 * * page 128, line 31 - page 129, line 5 * * page 130, line 30 - page 131, line 3 * * figure 1 * | 1-15 | INV. G06F16/55 G06F16/906 G06N3/00 |
| Y | WANG SHIYU ET AL: "Controllable Data Generation by Deep Learning: A Review", ACM COMPUTING SURVEYS, vol. 56, no. 9, 6 October 2022 (2022-10-06), pages 1-38, XP093207169, New York, NY ISSN: 0360-0300 Retrieved from the Internet: URL:https://arxiv.org/pdf/2207.09542v5> * abstract * * page 11, line 16 - line 33 * * figure 3(b)(c) * | 1-15 | TECHNICAL FIELDS SEARCHED (IPC) G06F G06N |

-/--

The present search report has been drawn up for all claims

| Place of search | Date of completion of the search | Examiner |
|---|---|---|
| Berlin | 23 September 2024 | Pose Rodríguez, J |

EPO FORM 1503 03.82 (P04C01)

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BUCHE CÉDRIC ET AL: "Conditional autoencoder pre-training and optimization algorithms for personalized care of hemophiliac patients", FRONTIERS IN ARTIFICIAL INTELLIGENCE, vol. 6, 25 January 2023 (2023-01-25), XP093207180, ISSN: 2624-8212, DOI: 10.3389/frai.2023.1048010 * abstract * * Section 3.1 * | 1-15 | |
| T | Fonnegra Ruben D ET AL: "Analysis of cellular phenotypes with unbiased image-based generative models", NeurIPS 2023 Generative AI and Biology Workshop, 28 November 2023 (2023-11-28), pages 1-8, XP93207434, Retrieved from the Internet: URL:https://openreview.net/pdf/9df9a24a026 86bb7ea0d8649b1a9f5cfacbfee99.pdf | 1-15 | **TECHNICAL FIELDS SEARCHED (IPC)** |

The present search report has been drawn up for all claims

| Place of search | Date of completion of the search | Examiner |
|---|---|---|
| Berlin | 23 September 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 462 282 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63501624